# EUROPEAN PATENT APPLICATION

(11) **EP 0 701 105 A1**
(43) Date of publication of application: **13.03.1996**
(21) Application number: 95306060.5
(22) Date of filing: 30.08.1995
(51) Int. Cl.: G01B 15/02, G01B 7/12, C03B 37/027

(54) **Method and apparatus for controlling the cross-sectional dimensions of optical fibers during fabrication**

(30) Priority: 12.09.1994 US 304755
(71) Applicant: AT&T Corp., New York, NY 10013-2412 (US)
(72) Inventor: Atkins, Robert Michael, Millington, New Jersey 07946 (US)
(74) Representative: Johnston, Kenneth Graham

(57) **Abstract**

A sensor for monitoring the cross-sectional dimensions of an optical fiber, as it is drawn from a preform, is disclosed.

The operation of the sensor is based upon the difference in the magnitude of the dielectric constants of silica (3.8) and air (1). This difference in dielectric constants is used to change the capacitance of a parallel plate capacitor or the resonant frequency of a cavity resonator. These changes are then used to adjust the rate at which the fiber is drawn.

## Description

### TECHNICAL FIELD

This invention relates to a method and apparatus for monitoring and controlling the cross-sectional dimensions of optical fibers during fabrication.

### BACKGROUND OF THE INVENTION

The fabrication of optical fibers typically comprises two steps. First a preform is made, and then the fiber is drawn from the preform. Perturbation during either of these processes can produce undesirable variations in the diameter of the resulting fiber. This, in turn, can result in increased losses within the fiber and at splices. Accordingly, arrangements have been developed for monitoring the fiber as it is drawn, and for controlling the drawing process so as to minimize such dimensional variations. Typical of such techniques is the arrangement described by D.H. Smithgall et al. in an article entitled "High speed noncontact fiber-diameter measurement using forward light scattering," published in the September 1977 issue of Applied Optics, Vol. 16, No. 9.

As explained in that article, measurements of the characteristics of the forward light scattering pattern from a clad fiber, illuminated by a light beam perpendicular to the fiber axis, can be used to determine the diameter of the fiber accurately. In particular, the fringe period is inversely proportional to the fiber diameter. An electrooptic system has been developed to produce and detect this scattering pattern during the fiber drawing process, and to control the rate at which the fiber is drawn in response to variations in the scattering pattern.

While this process can be used when the fiber has a circular cross section, it cannot be readily used with fibers that have highly elliptical cross sections unless some means are provided to prevent rotation of the major/minor axes of the ellipse. In order to maintain such a fixed orientation of the fiber axes, contact with a physical alignment guide would be required, resulting in a potential loss of fiber strength.

It is, accordingly, the object of the present invention to monitor and control the cross-sectional dimensions of circular and non-circular optical fibers during the fabrication process.

### SUMMARY OF THE INVENTION

The present invention is based upon the difference in the magnitude of the dielectric constants of silica (ca. 3.8) and air (ca. 1). This difference in dielectric constants can be used to change the capacity of a parallel plate capacitor, or the resonant frequency of a cavity resonator. Such a change would occur, for example, if the cross-sectional dimensions of the fiber changes as it is drawn through a resonant cavity or between the parallel plates of a capacitor. Such changes can then be used to vary the rate at which the fiber is drawn.

It is a feature of the invention that the magnitude of any change produced would, to a close approximation, be a function of the volume of the fiber and, therefore, its cross-sectional area. Accordingly, a sensor, in accordance with the present invention, is capable of measuring both circular and elliptical fibers, independent of the orientation of the major/minor axes of the fiber.

### BRIEF DESCRIPTION OF THE DRAWINGS

FIG. 1 shows a typical fiber drawing arrangement to which the invention relates;
FIGS. 2 and 3 show an illustrative embodiment of the invention employing a resonant cavity to sense changes in the cross-sectional dimensions of an optical fiber;
FIG. 4 shows an alternate embodiment of the invention; and
FIG. 5 illustrates the use of a capacitor to sense changes in the dimensions of an optical fiber.

### DETAILED DESCRIPTION

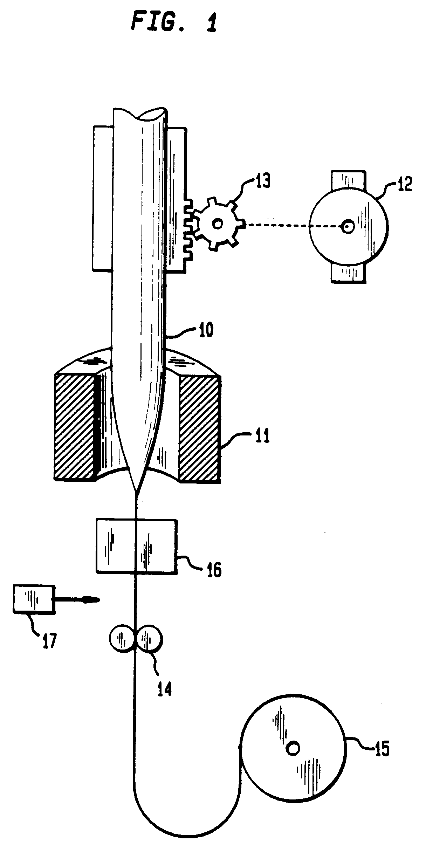

FIG. 1, now to be considered, shows a typical fiber drawing arrangement to which the invention relates. In such arrangements, a fiber preform 10 is fed into a furnace 11 at a rate determined by a preform feed motor 12 and gear 13. The heated preform is drawn from the bottom of the furnace 11 at a rate determined by a draw motor 14. The fiber is then stored on a reel 15.

To protect the fiber after it is drawn to size, it is coated with one or more plastic coatings before it makes contact with the draw motor. This process is indicated in the figure by a cladding processor 17.

A cross-sectional sensor 16, in accordance with the present invention, is located between the furnace 11 and cladding processor 17.

In operation, the fiber is drawn from the preform at a rate determined by the draw motor. The drawing rate, in turn, determines the fiber diameter. The function of the cross-sectional sensor 16 is to insure that the fiber diameter remains at its design value. If, however, it changes, a correcting signal is generated at the sensor and fed back to the draw motor. The draw rate is then changed in a sense to re-establish the desired fiber diameter.

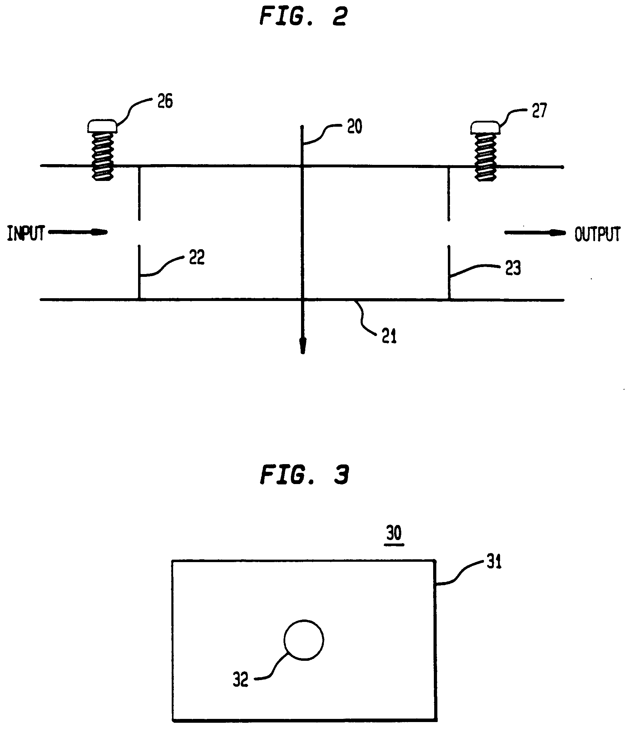

FIG. 2 illustrates one embodiment of a cross-sectional sensor in accordance with the present invention. In this embodiment, the drawn fiber 20 is passed through a waveguide cavity resonator 21. Basically, the latter consists of a short section of WR 90 waveguide (ca. 1" x 0.5") into which two iris plates 22 and 23 have been inserted. The section between the iris plates constitutes a 1/2 wave cavity resonator. FIG. 3 shows an example of an iris plate 30 comprising a metal plate 31 in which there is a centrally located aperture 32.

On either side of the cavity 21 matching screws 26 and 27 are suitably placed in order to match the cavity to the waveguide. In an illustrative embodiment of the invention, the resonant frequency of the cavity was approximately 10 GHz. When a fiber was inserted into the cavity, the resonant frequency of the cavity was changed (i.e. reduced) due to the loading effect of the fiber.

In operation, the signal at the output end of the sensor will depend upon the loading effect of the fiber passing through the cavity. If, for example, the fiber cross section increases for some reason, the resonant frequency of the cavity will decrease, thereby decreasing the magnitude of the waveguide output signal. If, on the other hand, the cross section of the fiber decreases, the loading effect will be decreased, and the amplitude of the output signal will increase. These changes are communicated to the draw motor whose rate changes in a sense to re-establish the desired cross-sectional dimensions.

It should be noted that inasmuch as the loading effect of the fiber is not affected by the orientation of the fiber, the sensor can be used with elliptically shaped fibers as well as round fibers.

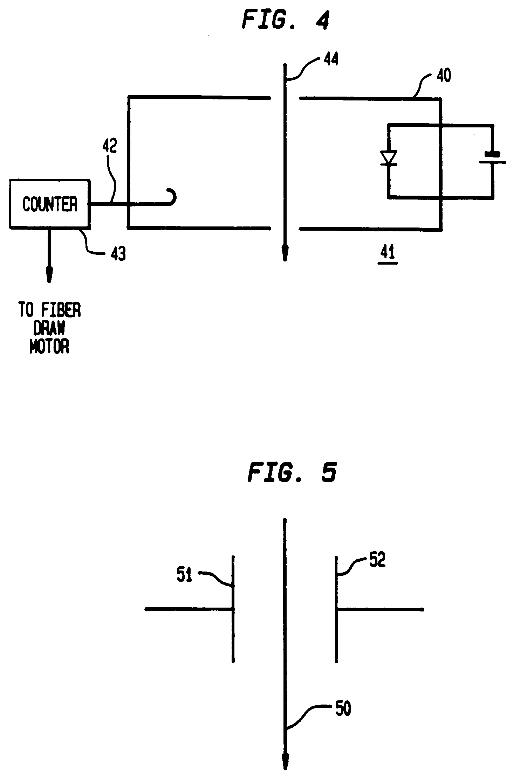

FIG. 4 shows an alternate embodiment of the invention in which a resonant cavity 40 is part of a Gunn oscillator 41. A pick-up probe 42 couples the oscillator to a counter 43 which measures the frequency of the oscillator. As a fiber 44 is drawn through cavity 40, the frequency of the oscillator will either increase or decrease with changes in the cross-sectional dimensions of the fiber. The resulting changes in the oscillator frequency are sensed by the counter which generates a correcting signal. The latter, fed back to the fiber draw motor, alters the rate at which the fiber is drawn.

It should be noted that the resonant frequency of the cavity will also vary as a function of temperature. Accordingly, the cavity may be advantageously temperature stabilized in an oven.

A second technique for fiber volume measurements involves the direct measurement of the change in capacitance when a fiber is brought between the plates of a parallel plate capacitor. This is illustrated in FIG. 5 which shows a fiber 50 passing between plates 51 and 52 of a parallel plate capacitor. In this embodiment the capacitor can stand alone, and its capacitance be measured using, for example, an HP 4278A capacitor measuring instrument. Alternatively, the capacitor can be part of a resonant circuit, and its effect on the resonant frequency of the uncut monitored, as explained in connection with the embodiment of FIG. 2.

## Claims

1. An optical fiber cross-sectional sensor comprising:
a resonant circuit;
means for passing an optical fiber through said resonant circuit;
and means for sensing changes in the resonant frequency of said circuit in response to changes in the cross-sectional dimensions of said fiber.

2. The sensor according to claim 1 wherein:
said resonant circuit comprises a length of waveguide bounded by a pair of irises.

3. The sensor according to claim 1 wherein:
said fiber is being drawn from a fiber preform;
and wherein the rate at which said fiber is drawn is varied in response to changes in the resonant frequency of said resonant circuit.

4. The sensor in accordance with claim 1 wherein:
said fiber has a non-circular cross section.

5. The sensor according to claim 1 wherein:
said fiber has a circular cross section.

6. An optical fiber cross-sectional sensor comprising:
a parallel-plate capacitor;
means for passing an optical fiber between said parallel plates;
and means for sensing changes in the capacity of said parallel plate capacitor.
